# EUROPÄISCHE PATENTSCHRIFT

(11) **EP 0 940 281 B1**
(45) Veröffentlichungstag und Bekanntmachung des Hinweises auf die Patenterteilung: **04.06.2003**
(21) Anmeldenummer: 99102180.9
(22) Anmeldetag: 04.02.1999
(51) Int. Cl.: B60J 7/057

(54) **Verfahren zum Steuern eines fremdkraftbetätigt zu öffnenden Daches eines Fahrzeuges mit einer Betätigungseinrichtung**
Control device for the powered opening roof of a vehicle and operating device
Système d'actionemment à distance pour toit ouvrant de véhicule et dispositif d'actionemment

(30) Priorität: 04.03.1998 DE 19809062
(43) Veröffentlichungstag der Anmeldung: 08.09.1999
(73) Patentinhaber: Dr.Ing. h.c.F. Porsche Aktiengesellschaft, 70435 Stuttgart (DE)
(72) Erfinder: Häcker, Walter, 71732 Tamm (DE); Dahmen, Hans-Dieter, 75242 Neuhausen (DE)

(56) Entgegenhaltungen:
- EP-A- 0 368 257
- DE-C- 19 615 125
- US-A- 5 451 849

## Beschreibung

Die Erfindung betrifft ein Verfahren zum Steuern eines fremdkraftbetätigt zu öffnenden Daches eines Fahrzeuges nach dem, in US 5 451 849 A offenbarten Oberbegriff des Patentanspruches 1.

Die bekannten Steuerverfahren zur Betätigung eines bewegbaren Daches setzten stets eine Bedieneinrichtung vorraus, mit der die Bewegungsrichtung des Daches vorgegeben werden kann. Es ist somit stets eine Schaltposition für "Dach schließen" und eine weitere Schaltposition für "Dach öffnen" vorgesehen.

Es ist demgegenüber Aufgabe der Erfindung, ein Verfahren zum Steuern eines zu öffnenden Daches eines Fahrzeuges zu schaffen, das mit einer vereinfachten Bedieneinrichtung auskommt.

Die Aufgabe wird erfindungsgemäß mit den Merkmalen des Patentanspruches 1 gelöst Erfindungsgemäß wird vorgeschlagen, die Betätigungsrichtung des Daches abhängig von der Stellung des Daches zu wählen. In vorteilhafter Weise wird bei einem derartigen Verfahren nur noch eine Bedieneinrichtung mit einer einzigen Bedienstellung benötigt.

Vorteilhafte Weiterbildungen sind in den Unteransprüchen dargestellt.

So wird vorgeschlagen, zu prüfen, ob das Dach vollständig geöffnet ist und bei positivem Prüfungsergebnis ein Schließvorgang einzuleiten. Bei negativem Prüfungsergebnis hingegen wird ein Öffnungsvorgang eingeleitet.

Ferner wird vorgeschlagen, zuvor zu prüfen, ob in einem vorgegebenen Zeitraum vor der aktuellen Betätigung der Bedienvorrichtung bereits eine Betätigung der Bedienvorrichtung erfolgte. Bei positivem Ergebnis dieser Prüfung wird die Betätigungsrichtung des Daches gegenüber der vorhergehenden Betätigung umgekehrt. Bei negativem Prüfungsergebnis hingegen erfolgt die Wahl der Betätigungseinrichtung wie zuvor beschrieben.

Besondere Vorteile entfaltet das erfindungsgemäße Verfahren bei einer Verwendung in Verbindung mit einer Fernbedienung. Aufgrund der bei einer Fernbedienung - insbesondere, wenn diese in einen Schlüsselkopf integriert ist - beengten Platzverhältnisse ist es wünschenswert, eine möglichst geringe Zahl von Schaltfunktionen an der Fernbedienung anzuordnen. Durch die Verwendung des erfindungsgemäßen Verfahrens ist es nun möglich, an einer Fernbedienung nur eine einzige Schaltfunktion zur Betätigung des Daches vorzusehen und dennoch eine beliebige Betätigung des Daches zu ermöglichen. Die Fernbedienung kann hierbei alternativ oder ergänzend zu einem fest am Fahrzeug angebrachten Schalter vorgesehen sein. Auch ein fest am Fahrzeug angeordneter Schalter kann in der beschriebenen Weise auf eine einzige Schaltfunktion reduziert werden, um so eine übereinstimmende Bedienung sowohl mit der Fernbedienung wie auch mit dem fest angeordneten Schalter zu erzielen.

Schließlich ist es für eine in einen Schlüsselkopf integrierte Fernbedienung möglich, die Schaltfunktion zum Ent- bzw. Verriegeln des Fahrzeuges mit der Schaltfunktion zur Dachbetätigung zusammenzufassen, um so die Anzahl der Schaltfunktionen an der Fernbedienung weiter zu reduzieren. In diesem Fall erfolgt eine Dachbetätigung erst dann, wenn die Schaltfunktion über einen vorgegebenen Zeitraum betätigt worden ist. Ist bereits eine Dachbetätigung erfolgt, so kann in der oben beschriebenen Weise durch erneute Betätigung der Schaltfunktion die Bewegungsrichtung umgekehrt werden.

Die Erfindung ist nachstehend anhand des in den Figuren dargestellten Ausführungsbeispieles näher beschrieben. Es zeigen
- Fig. 1: Ein Fahrzeug mit einem Faltdach, wobei sich das Faltdach in seiner geschlossenen Position befindet,
- Fig. 2: ein Fahrzeug nach Fig. 1, wobei sich das Faltdach in seiner halb geöffneten Position befindet,
- Fig. 3: ein Fahrzeug nach Fig. 1, wobei sich das Faltdach in seiner vollständig geöffneten Position befindet und
- Fig. 4: einen Schlüssel mit Fernbedieneinrichtung.

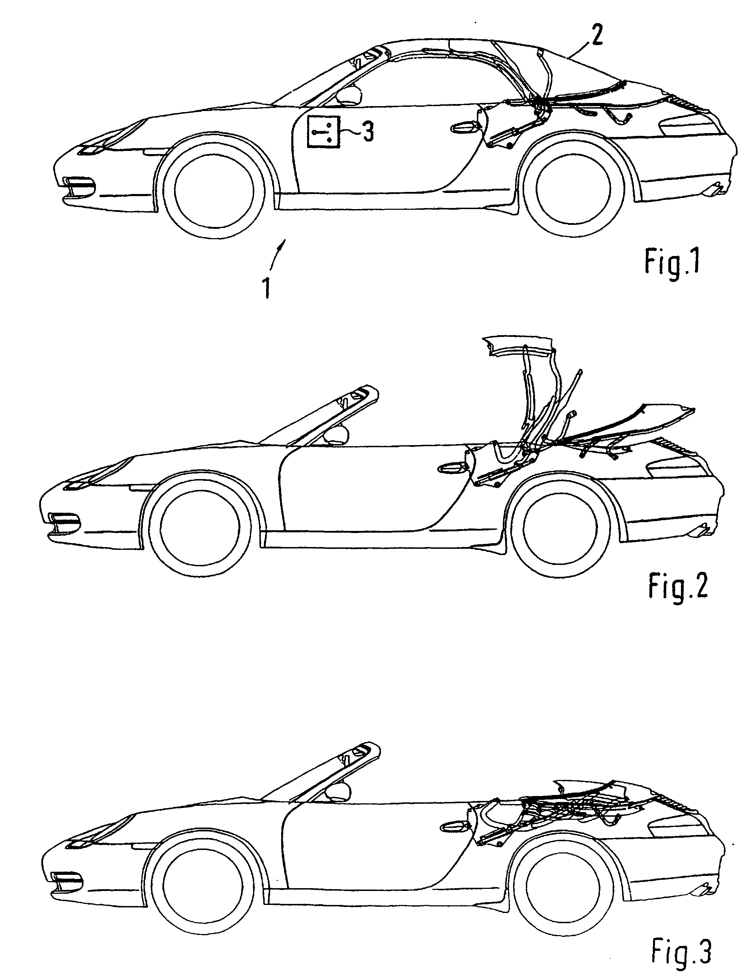

Ein Fahrzeug 1 ist mit einem Faltdach 2 versehen, das aus einer geschlossenen Position Fig. 1 über eine teilweise geöffnete Position Fig. 2 in eine geschlossene Position Fig. 3 verbracht werden kann. Innerhalb des Fahrzeuges ist zur Betätigung des Faltdaches 2 ein Schalter 3 vorgesehen, der zwei Schaltpositionen "Öffnen" und "Schließen" aufweist.

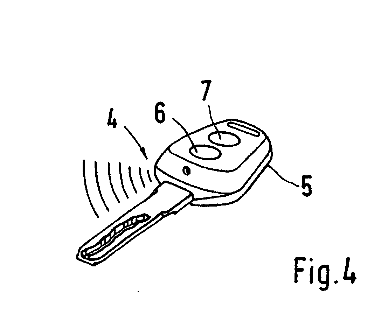

Zum Ver- und Entriegeln des Fahrzeuges ist an einem in Fig. 4 dargestellten Schlüssel 4 eine Fernbedieneinrichtung 5 vorgesehen, die zwei Tasten 6 und 7 aufweist und drahtlos mit dem Fahrzeug verbunden ist. Während die erste Taste 6 zum Ver- und Entriegeln des Fahrzeuges vorgesehen ist, dient die zweite Taste 7 als Bedienvorrichtung zur Betätigung des Faltdaches 2.

Wird die zweite Taste 7 betätigt, so wird zunächst geprüft, ob in einem vorgegebenen Zeitraum T1, z.B. 2 Sekunden, vor der aktuellen Betätigung der zweiten Taste 7 bereits das Faltdach 2 bewegt worden ist. Ist dies der Fall, handelt es sich bei der aktuellen Betätigung der zweiten Taste 7 also um eine Betätigung, die kurz auf eine vorausgegangene Betätigung des Daches 2 folgt. In diesem Fall wird die Bewegungsrichtung des Daches gegenüber der Bewegungsrichtung bei der zuvor erfolgten Betätigungsrichtung des Daches umgekehrt.

Anschließend wird geprüft, ob das Dach vollständig geöffnet oder geschlossen ist. Bei vollständig geöffnetem Dach 2 wird unabhängig von der zuvor erfolgten Prüfung ein Schließvorgang des Daches 2 eingeleitet, während bei vollständig geschlossenem Dach 2 unabhängig von der zuvor erfolgten Prüfung ein Öffnungsvorgang des Daches 2 eingeleitet wird. Ergibt die Prüfung hingegen keinen der beiden Zustände, d.h. das Dach 2 ist teilweise (vgl. Fig. 2) geschlossen, so wird ein Öffnungsvorgang eingeleitet, sofern nicht durch die zuerst erfolten Prüfungsschritte bereits eine andere Bewegungsrichtung des Daches 2 festgelegt ist.

Um eine versehentliche Betätigung des Daches 2 zu verhindern, wird erst dann eine Bewegung des Daches 2 eingeleitet, wenn die Taste 7 für einen vorgegebenen Zeitraum T2, hier 2 Sekunden, gedrückt worden ist. Ist jedoch zuvor festgestellt worden, daß vor der aktuellen Betätigung der zweiten Taste 7 bereits das Faltdach 2 innerhalb des vorgegebenen Zeitraumes T1 bewegt worden ist, so wird eine Bewegung des Daches unmittelbar mit dem Drücken der Taste 7 eingeleitet.

## Patentansprüche

1. Verfahren zum Steuern eines fremdkraftbetätigt zu öffnenden Daches (2) eines Fahrzeuges (1) mit einer Bedien einrichtung (3,4), **dadurch gekennzeichnet, daß** die Betätigungsrichtung des Daches abhängig von der Stellung des Daches und mit einer einzigen Bedienstellung der Bedieneinrichtung (3, 4) gewählt wird.

2. Verfahren nach Anspruch 1, **gekennzeichnet durch** folgende Schritte:
- Prüfen, ob das Dach (2) vollständig geöffnet ist,
- falls ja: Auslösen eines Schließvorganges des Daches
- falls nein: Auslösen eines Öffnungsvorganges des Daches

3. Verfahren nach Anspruch 1 oder 2, **gekennzeichnet durch** folgende Schritte:
- Prüfen, ob eine vorhergehende Bewegung des Daches (2) innerhalb eines vorgegebenen Zeitraumes (T1) erfolgt ist,
- falls ja: Auslösen eines Bewegungsvorganges des Daches mit umgekehrter Bewegungsrichtung.

4. Anwendung des Verfahrens nach einem der vorstehenden Ansprüche bei einer Fernbedienung (4) eines Fahrzeuges.

5. Anwendung des Verfahrens nach einem der Ansprüche 1 bis 3 bei einem fahrzeugfest angeordneten Schalter (3).

## Claims

1. A method of controlling a roof (2) - to be opened by external-power actuation - of a vehicle (1) by an operating device (3, 4), **characterized in that** the actuating direction of the roof is selected as a function of the setting of the roof and with a single operating setting of the operating device (3, 4).

2. A method according to Claim 1, **characterized by** the following steps:
- checking to see whether the roof (2) is completely opened,
- if so: initiating a closure procedure of the roof;
- if not: initiating an opening procedure of the roof.

3. A method according to Claim 1 or 2, **characterized by** the following steps:
- checking to see whether a previous movement of the roof (2) has taken place within a pre-determined period of time (**T1**),
- if so: initiating a movement procedure of the roof with a reversed direction of movement.

4. Use of the method according to one of the preceding Claims in a remote-control (4) of a vehicle.

5. Use of the method according to one of Claims 1 to 3 in a switch (3) arranged fixed to the vehicle.

## Revendications

1. Procédé de commande d'un toit (2), à ouvrir par commande assistée, d'un véhicule (1), comportant un dispositif de manoeuvre (3, 4), **caractérisé en ce que** le sens d'actionnement du toit est choisi en fonction de la position du toit et avec une seule position de manoeuvre du dispositif de manoeuvre (3, 4).

2. Procédé selon la revendication 1, **caractérisé par** les étapes suivantes:
- vérifier si le toit (2) est totalement ouvert,
- si oui : déclencher une opération de fermeture du toit,
- si non : déclencher une opération d'ouverture du toit.

3. Procédé selon la revendication 1 ou 2, **caractérisé par** les étapes suivantes :
- vérifier si un mouvement précédent du toit (2) s'est produit à l'intérieur d'un intervalle de temps (T1) prédéfini,
- si oui : déclencher une opération de mouvement du toit avec sens inversé du mouvement.

4. Mise en oeuvre du procédé selon l'une des revendications précédentes, dans une télécommande (4) d'un véhicule.

5. Mise en oeuvre du procédé selon l'une des revendications 1 à 3 dans un interrupteur (3) solidaire du véhicule.
